# EUROPEAN PATENT SPECIFICATION

(11) **EP 4 330 721 B1**
(45) Date of publication and mention of the grant of the patent: **09.09.2026**
(21) Application number: 22725239.2
(22) Date of filing: 25.04.2022
(51) Int. Cl.: G01S 15/42, G01S 15/87, G01S 15/89, G01S 7/527, G01S 7/53, G01S 15/66

(54) **METHOD OF FILTERING ACOUSTIC B-SCAN SIGNALS FOR PASSIVE DETECTION OF AN OBJECT UNDERWATER**
VERFAHREN ZUR FILTERUNG VON AKUSTISCHEN B-SCAN-SIGNALEN ZUR PASSIVEN DETEKTION EINES UNTERWASSEROBJEKTS
PROCÉDÉ DE FILTRAGE DE SIGNAUX DE BALAYAGE B ACOUSTIQUE POUR LA DÉTECTION PASSIVE D'UN OBJET SOUS L'EAU

(30) Priority: 26.04.2021 GB 202105949
(43) Date of publication of application: 06.03.2024
(73) Proprietor: Wavefront Systems Limited, Somerset, BA22 7JQ (GB)
(72) Inventor: CROOK, Robert, Castle Cary Somerset BA7 7JW (GB)
(74) Representative: Kay, Ross Marcel
(86) International application number: PCT/EP2022/060877
(87) International publication number: WO 2022/229087

(56) References cited:
- DE-T2- 69 426 849
- US-A1- 2010 046 326
- US-A1- 2016 187 474

## Description

The present invention relates to method of filtering acoustic B-scan signals, the method being of the type that, for example, is used for passive detection of an object in a region of an underwater environment.

In recent years, increasing effort has been devoted to securing maritime assets against the actions of terrorists and saboteurs. Above-water surveillance and access control is a crucial part of this task and can be addressed through a number of conventional technologies such as Close-Circuit Television (CCTV), Forward Looking Infra-Red (FLIR) systems, radar and swipe card access systems. Underwater security has however, until now, been acknowledged as the weakest link in the defence of ships, harbours and on-shore facilities.

For example, it is desirable to detect reliably underwater "targets" in an acoustic environment of a harbour. To achieve this, an entrance of the harbour can be monitored. Moreover, under the International Ship and Port Facility Security Code (ISPS code), it is necessary to ensure protection against foreseeable events and so monitoring of a particular underwater security zone is also desirable. Additionally, naval vessels at anchor in overseas ports, cruise liners in harbours and super-yachts moored off a coast, are all examples of specific assets that require protection from intruders.

An increase in threats of insurgency, vandalism and/or criminal activity extends not only to ports and military assets, but also to oil and gas installations, whether coastal or offshore. As such, these installations also need protection from intruders.

The Sentinel Intruder Detection Sonar (IDS) system, available from Sonardyne International Limited, is a known underwater surveillance system providing protection for strategic and high value marine assets, including oil and gas installations, power stations, ports and harbours, as well as luxury and naval vessels. The Sentinel IDS^{®} system comprises, inter alia, multiple so-called sonar heads capable of processing acoustic signals in respect of hundreds of receiver channels per sonar head. The acoustic channel data received is sampled, pulse compressed and beamformed to produce directional beams data frames known as 'B-scans' before being processed further to track underwater intruders, for example Self-Contained Underwater Breathing Apparatus (SCUBA), closed-circuit divers, submarines, swimmers, surface craft and Autonomous Underwater Vehicle (AUV) drones. These "contacts" detected as a result of the processing are displayed in real-time in a tactically relevant manner via a user interface. This system is an active system in that the surrounding water has to be ensonified to detect and track acoustic energy reflected by said contacts.

Active detection and tracking systems have the advantage that since they do not rely on the often weak contact acoustic emissions for detection and tracking, they are therefore able to operate effectively in noisy underwater environments such as busy ports and harbours. Such systems achieve high target Signal-to-Noise Ratios (SNRs) in these scenarios by being designed to operate at advantageous frequencies that are selected for maximising target echo returns whilst minimising receiver background noise. State-of-the-art projector/receiver multi-channel transducers array designs, involving large (multi-wavelength) apertures in conjunction with appropriate signal processing, provide high receiver spatial processing gain, essential in allowing the active detection and tracking system the ability to discriminate potentially weaker echo returns in one direction from stronger returns in another. Furthermore, active systems are capable of localising spatially a contact return in both range and bearing from a single sonar head.

This is in contrast to passive detection and tracking systems, which typically struggle to detect and track weakly emitting contacts in such noisy underwater environments owing to their lack of spatial processing gain. In this regard, such systems typically comprise a single hydrophone or small, sparse 'nodal' collections of hydrophones rather than fully populated receiver arrays and are unable to control fully the choice of receiver frequency bandwidth, because this is driven by the nature of the emissions by the contacts. Furthermore, passive systems cannot spatially localise a contact return in both range and bearing from a single hydrophone node and must instead rely on multiple spatially distributed nodes for such localisation necessary for tracking. This considerably impacts on the practicality of installation in working environments, for example command and control, and/or cabling.

A further disadvantage of passive detection and tracking systems is that they struggle to distinguish weak passive contacts of interest, for example drone intrusion, whilst simultaneously listening to far louder noise sources of no tactical interest, for example noise associated with general harbour activity and/or vessel manoeuvring, owing to the high dynamic range variations associated with the different kinds of contacts. This tends to create copious, spurious detections in the presence of sources of high amplitude acoustic emissions, for example ships in harbours, sometimes to the extent of saturation.

However, despite these issues, passive detection and tracking systems have some unique advantages over active detection and tracking systems. Some contacts are not necessarily sufficiently reflective of emitted acoustic energy incident upon them to enable them to be detected, but may nevertheless be 'visible' to passive detection systems owing to their own low-level acoustic emissions. Also, there is potential information in these low-level acoustic emissions that could enable some form of target classification, for example whether a detected target is or is not a threat, based on successful passive detection and tracking.

It is known to deploy two independent detection systems: a multi-node passive sonar detection and tracking system with an active sonar detection and tracking system operating in the same region. However, such systems suffer from a number of disadvantages. As the sonar heads of such systems are separate and independent, it is necessary to provide an additional level of processing in order to geographically and temporally co-register tracking results from both the active detection system and the passive detection system. Indeed, even with the provision of co-registration processing, the resulting co-registered output of the combined detection system can suffer from absolute positioning and orientation errors. Additionally, the acoustic emissions of the active sonar detection and tracking system generates a background level of acoustic energy that typically masks the lower amplitude and hence more subtle acoustic emissions from less acoustically reflective contacts, thereby presenting detection problems for the passive sonar detection and tracking system. This issue is often present even if the active and passive sonar systems have nominally separated operating bandwidths due to interference caused by out-of-band transmission energy 'leakage' from the active system or inadequate/imperfect bandwidth filtering in the signal processing of the passive system.

As such, the combined system effectively needs to switch periodically between the active detection and tracking subsystem and the passive detection and tracking subsystem to mitigate polluting detection channels of the passive detection and tracking system with reverberant energy from the active detection and tracking system. However, such switching presents challenges in maintaining coherent tracks of objects of interest and developing sufficiently intelligent control logic capable of deciding when to switch between the active detection and tracking system and the passive detection and tracking system. Also, where both active and passive detection and tracking systems are used independently but in combination, non-overlapping operating bandwidths have to be employed, creating the additional disadvantage to both systems of having to reduce bandwidth and/or shift operating frequencies to non-optimal regions of the acoustic spectrum. Any such reduction in operating bandwidth is undesirable: it will limit the signal energy / information content of a passive system, whilst degrading the range resolution and reverberation suppression of an active system.

It is therefore desirable to perform active as well as passive detection and tracking of underwater targets substantially contemporaneously over the same time period and over identical or overlapping bandwidths. It is also desirable for the active/passive sensor to be co-located and thus share an identical spatial location. DE 694 26 849 T2 relates to acoustic positioning of streamers using a synchronous active system that emits a known acoustic signal. US patent publication no. 2016/0187474 A1 relates to techniques to provide dynamic threshold sonar systems for mobile structures. US patent publication no. 2010/046326 A1 related to a method and apparatus for detecting and classifying a submerged swimming object from a passive signal.

According to a first aspect of the present invention, there is provided a method of filtering an acoustic B-scan for passive detection of an object underwater, the method characterised by: ensonifying a region of an underwater environment; receiving acoustic signals from the ensonified region of the underwater environment, the received acoustic signals corresponding to a plurality of sonar beams; generating acoustic B-scan from the received acoustic signals, the acoustic B-scan comprising a plurality of sets of samples respectively corresponding to a plurality of acoustic projection beams; pre-processing the acoustic B-scan to supress dynamic ranges of the pluralities of sets of samples of the acoustic B-scan, thereby removing historic artefacts and mitigating influence of reverberant energy; scoring energy content in respect of the pre-processed acoustic B-scan to provide a plurality of energy scores; identifying at least one local maximum of the plurality of energy scores; applying a predetermined criterion to a local maximum of the at least one local maximum identified in order to identify one or more acoustic projection beams of the pre-processed acoustic B-scan corresponding to transient emission signals of interest.

The application of the predetermined criterion may be comparing the local maximum of the at least one local maximum identified with respect to the predetermined criterion.

The predetermined criterion may be an energy score threshold value.

The method may further comprise: calculating the predetermined criterion using one or more of: a sampling rate, a transient signal duration and/or a signal detection level.

The signal detection level may be a normalised amplitude level and the signal detection level may be set between 0.5 decibel and 10 decibels.

The signal detection level may be between about 1 decibel and 5 decibels, for example between about 1 decibel and 3 decibels.

Scoring energy content in respect of the pre-processed acoustic B-scan may further comprise: setting a signal clipping level; and integrating energy recorded in respect of each projection beam in the pre-processed acoustic B-scan equal to and/or below the signal clipping level.

The application of the predetermined criterion may comprise filtering the at least one local maximum in order to discount a local maximum of the at least one local maximum that is not a potential source of non-reverberant energy.

The method may further comprise: applying a window to the plurality of energy content scores; generating a count of local maxima conforming to the predetermined criterion within the window; and translating the window.

The window may correspond to a range of bearings. A size of the window may be configurable.

Applying the window to the plurality of energy content scores may further comprise: applying a sliding box car filter to the plurality of energy content scores.

The method may further comprise: setting a maximum count threshold; and identifying any local maxima conforming to the predetermined criterion within the window in response to the count exceeding the maximum count threshold to provide a set of non-compliant local maxima identities.

The method may further comprise: identifying a local maximum outside the set of non-compliant local maxima identities as a potential source of non-reverberant energy.

According to a second aspect of the present invention, there is provided a method of passive acoustic detection of an object in an ensonified region of an underwater environment, the method comprising: filtering an acoustic B-scan using the method of filtering an acoustic B-scan for passive detection of an object underwater as set forth above in relation to the first aspect of the present invention; analysing a result of the application of the predetermined criterion to the local maximum identified in order to determine whether the local maximum constitutes a potential source of non-reverberant energy; and tracking the potential source of non-reverberant energy.
According to a third aspect of the present invention, there is provided a method of performing active and passive acoustic detection substantially contemporaneously in respect of a region of an underwater environment, the method comprising: performing the method of passive acoustic detection as set forth above in relation to the second aspect of the present invention to detect the source of non-reverberant energy in the underwater environment; receiving a plurality of acoustic signal streams subsequent to commencement of the ensonification of the region of the underwater environment; and performing active detection processing in respect of the acoustic B-scan generated for detecting a source of reverberant energy in the underwater environment of a predetermined category.

It is thus possible to provide a method of pre-processing acoustic signals and a method of filtering an acoustic B-scan that are capable of providing significantly enhanced passive detection and tracking by retaining all the spatial processing gains associated with an active sonar detection and tracking system. Additionally, tracking between the active and passive sub-systems is spatially co-registered. Furthermore, the method overcomes the need to switch between the passive and active subsystems. It therefore follows that the contemporaneous use of the active and passive subsystems is possible, and also without adversely affecting the performance of the active subsystem through use of common operating bandwidths for both subsystems. The ability to complement active detection and tracking with passive detection and tracking using common hydrophone hardware enables tracking of low reflectivity targets of interest, and indeed targets that are moving very slowly or are stationary. The addition of the ability to track targets passively also enables some targets that are obscured from direct ensonification to be tracked. Also, supplementing active tracking and detection with passive detection and tracking enhances so-called kinematic based classification of active tracks with signature based passive classification. Where more than one sonar head is employed in tandem for passive detection and tracking, further positional information can be discerned, for example to supplement positional information using the active tracking subsystem.

At least one embodiment of the invention will now be described, by way of example only, with reference to the accompanying drawings, in which:
**Figure 1** is a schematic diagram of an underwater environment that is being monitored by an underwater sonar monitoring system constituting an embodiment of the invention;
**Figure 2** is a schematic diagram of the underwater sonar monitoring system of Figure 1 in greater detail;
**Figure** 3 is a schematic diagram of a processor platform of Figure 2 in greater detail;
**Figure 4** is a high-level block diagram of functional elements supported by the underwater sonar system of Figures 1, 2 and 3;
**Figure 5** is a block diagram of processing elements supporting the high-level functional blocks of Figure 4;
**Figure 6** is a block diagram of a processing chain supported by a receiver processing unit and a signal processing unit of Figure 5;
**Figure 7** is a block diagram of a passive processing chain supported by the passive signal process unit of Figure 6;
**Figure 8** is a flow diagram of a method of passively detecting a source of acoustic energy emissions constituting another embodiment of the invention;
**Figure 9** is a schematic diagram of an acoustic B-scan used by the passive signal process unit of Figure 5;
**Figure 10** is a schematic diagram of sample selection performed in relation to the acoustic B-scan of Figure 9;
**Figure 11** is a schematic diagram of sample compression performed in relation to a selection of Figure 10 in respect of the B-scan of Figure 9;
**Figure 12** is a schematic diagram of a reference map in respect of the underwater environment of Figure 1;
**Figure 13** is a schematic diagram of the compressed B-scan of Figure 11 in greater detail; and
**Figure 14** is a schematic diagram of an output of a ratioing function using the reference map of Figure 12 and the compressed B-scan of Figure 13;
**Figures 15(a) to (c)** are amplitude scans (A-scans) in respect of three beams of the extant compressed acoustic B-scan of Figure 14;
**Figures 16(a) to (c)** are the A-scans of Figures 15(a) to (c), respectively, in greater detail;
**Figure 17** is a schematic diagram of calculated beam scores generated from A-scans, for example A-scans of Figure 16;
**Figure 18** is a flow diagram of a method of filtering scores for passive detection constituting a further embodiment of the invention; and
**Figure 19** is a schematic diagram of another underwater sonar monitoring system employing more than one hydrophone head.

Throughout the following description identical reference numerals will be used to identify like parts.

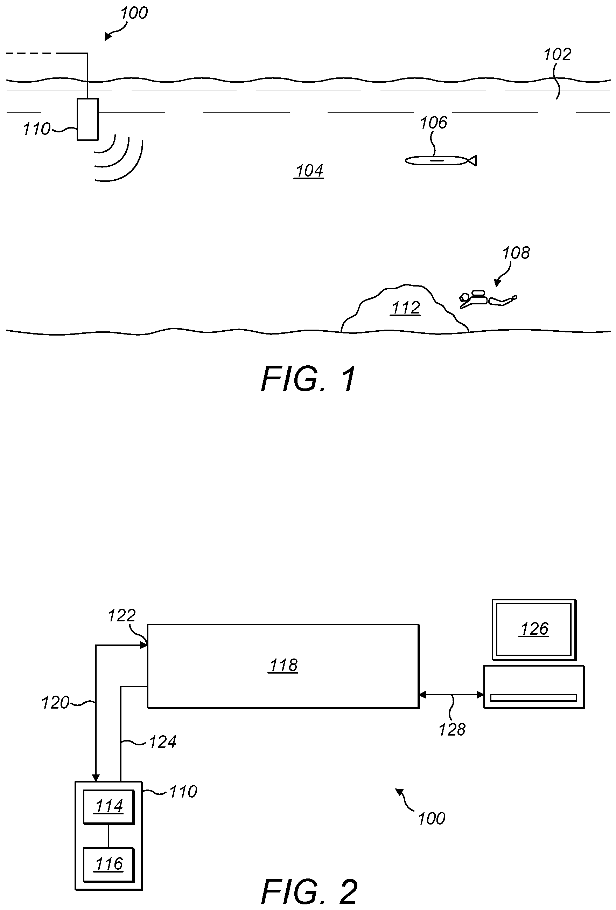

Referring to Figure 1, a combined active and passive underwater sonar monitoring system, for example an underwater intruder detection system 100 is immersed in an underwater environment 102. In this example, purely to assist in the understanding of operation of the underwater intruder detection system 100, a region to be ensonified 104 of the underwater environment 102 comprises an autonomous underwater vehicle (AUV) 106, and a SCUBA diver 108 obscured from a projector field of view of a sonar head unit 110 of the underwater intruder detection system 100 by a natural underwater clutter feature, for example a large rock formation 112. In each case, the targets of interest 106, 108 may exist at a range from the sonar head unit 100 which is co-incident with the range to the clutter 112 in such a manner as to lower their respective Signal-to-Background Ratios (SBRs) for active detection. The sonar head unit 110 is, for example a Sentinel^{™} sonar head, available from Sonardyne International Limited, UK.

Turning to Figure 2, in this example, the sonar head 110 comprises a transceiver array to provide a combined transmit and receive array and associated signal processing circuitry. The sonar head 110 has a wide bandwidth transmission capability, having a central frequency of about 70kHz and a bandwidth in excess of about 20kHz. The sonar head 110 comprises eight separate 45° transmit sectors, which are individually addressable, allowing any segment to be disabled to reduced nuisance acoustic returns from close objects, such as harbour walls or jetties. The transmitters of the sonar head 110 are programmable and supplied with a number of different selectable frequency modulated Doppler tolerant pulse shapes.

In this example, a transducer array of the transceiver array is a compact 1:3 piezo-composite transducer array having 128 separately wired channel elements, which can be used to form 256, equally spaced, receive beams, each with a 1.4° angular spacing.

As mentioned above, the sonar head 110 also comprises signal processing circuitry (not shown) to digitise, mix down to baseband, filter, multiplex and transfer the signals received by the transducer array. The sonar head 110 also comprises attitude, heading reference and position sensors 114 to monitor orientation and position of the sonar head 110 and constitutes a source of orientation and position data in respect of receipt of sonar reflections. A data enrichment module 116 of the sonar head 110 is capable of enriching acoustic reflectivity data with attitude, heading and position information obtained from the attitude, heading reference and position sensors 114.

The sonar head 110 is operably coupled to a processor platform unit 118 via either a 75m copper or 300m or greater fibre-optic cable 120 coupled to an input/output port 122. A power supply cable 124 also couples the sonar head 110 to the processor platform unit 118. The processor platform unit 118 is, in this example, a Sentinel^{™} processor platform available from Sonardyne International Limited, but adapted to operate in accordance with the method set forth herein.

The processor platform unit 118 is operably coupled to a workstation 126, for example a computing apparatus, such as a first Personal Computer (PC), via any suitable data communications link, for example an Ethernet link 128. The workstation 126 supports the execution of software, for example an operator console module, which provides a tactical-style display. The workstation 126 is a Sentinel^{™} command workstation, available from Sonardyne International Limited.

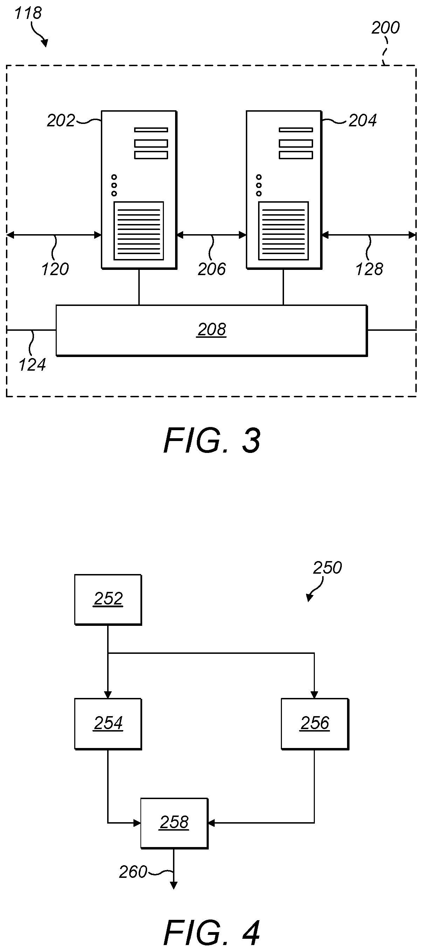

Turning to Figure 3, the processor platform unit 118 comprises a rugged housing, for example a case 200, comprising a processing resource, for example a computing apparatus, such as a second high-performance PC 202 operably coupled to a third high-performance PC 204 via, for example, a communications link, such as another Ethernet connection 206. In this example, the third PC 204 is operably coupled to the workstation 126 via the Ethernet link 128, and the second PC 202 is operably coupled to the sonar head 110 via the cable 120 and a suitable interface card (not shown), depending upon whether an electrical or optical connection is made to the sonar head 110.

Although, in this example, the first, second and third PCs 126, 202, 204 are connected using direct Ethernet connections, the skilled person will appreciate that a communications network, for example an Ethernet network, can be employed in order to interconnect the first, second and third PCs 126, 202, 204 as desired.

In order to power the intruder detection system 100, at least in respect of the processor platform unit 118 and the sonar head 110, the processor platform unit 118 comprises a power distribution unit 208. The power distribution unit 208 comprises, for example, batteries in order to power the second PC 202, the third PC 204 and the sonar head 110. Of course, if a vessel-based power supply is available, the power distribution unit 208 is capable of deriving and delivering electrical power from this source. In this example, the power distribution unit 208 is operably coupled to the sonar head 110 via the power supply cable 124. However, the skilled person will appreciate that the power distribution unit 208 can be used also to power the workstation 126 or simply to power the second and third PCs 202, 204. In the event that the power distribution unit 208 is not used to power the sonar head 110, the sonar head 110 can be provided with its own power supply.

Referring to Figure 4, the second and third PCs 202, 204 cooperate to support initial signal processing 252 by processing data received from acoustic hydrophone elements using pulse compression and beam-forming. The results of the initial signal processing 252 are fed into an active detection and tracking processing chain 254 and a passive detection and tracking processing chain 256, the active and passive detection and tracking processing chains 254, 256 providing data that are then subsequently filtered 258 to yield a classified track output 260. The classified track output 260 is subsequently used by other downstream processing functionality, for example to present classified tracks.

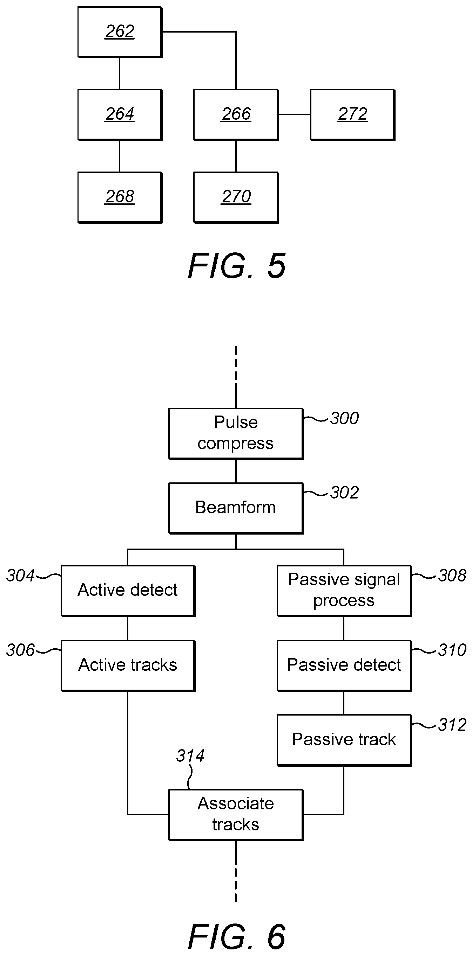

Turning to Figure 5, in order to support the above-described high-level functionality, the second and third PCs 202, 204 cooperate to provide a control unit 262 operably coupled to a transmitter unit 264 and a receiver processing unit 266. The transmitter unit 264 is operably coupled to a logical projector array 268 of the transducer array of the sonar head 110 mentioned above. Similarly, the receiver processing unit 266 is operably coupled to a logical receive array 270 of the transducer array of the sonar head 110. The receiver processing unit 266 is also operably coupled to a signal processing resource 272.

Referring to Figure 6, the receiver processing unit 266 supports a pulse compression module 300 operably coupled to a beamforming module 302. The pulse compression and beamforming modules 300, 302 correspond to the initial signal processing 252 described above in relation to Figure 4. In this regard, the signal processing resource 272 of Figure 5 supports an active detection module 304 operably coupled to the beamforming module 302, the active detection module 304 also being operably coupled to an active tracking module 306. In this example, the active detection module 304 and the active tracking module 306 are in the active detection and tracking processing chain 254 of Figure 4. The signal processing resource 272 of Figure 5 also supports a passive signal processing module 308 operably coupled to the beamforming module 302. The passive signal processing module 308 is also operably coupled to a passive detection module 310, the passive detection module 310 being operably coupled to a passive tracking module 312. In this example, the passive signal processing module 308, the passive detection module 310 and the passive tracking module 312 are in the passive detection and tracking processing chain 256 of Figure 4. The active tracking module 306 and the passive tracking module 312 are both operably coupled to an association filter module 314 supported by the signal processing resource 272.

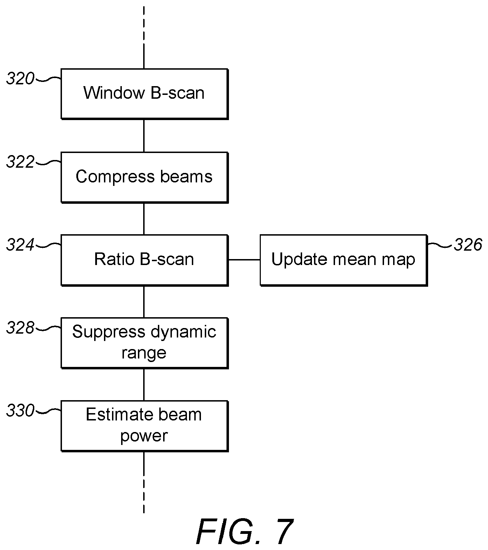

Turning to Figure 7, the passive signal processing module 308 supports the following functional modules. A B-scan windowing module 320 is operably coupled to the beamforming module 302 and a beam compression module 322, the beam compression module 322 being operably coupled to a ratio function module 324. A reference map module 326 is operably coupled to the ratio function module 324 and the ratio function module 324 is also operably coupled to a dynamic range suppression module 328. The dynamic range suppression module 328 is operably coupled to a beam power estimation module 330.

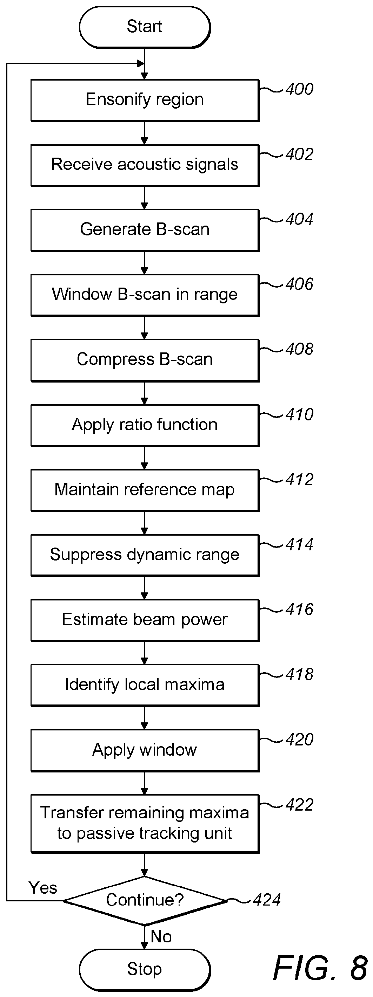

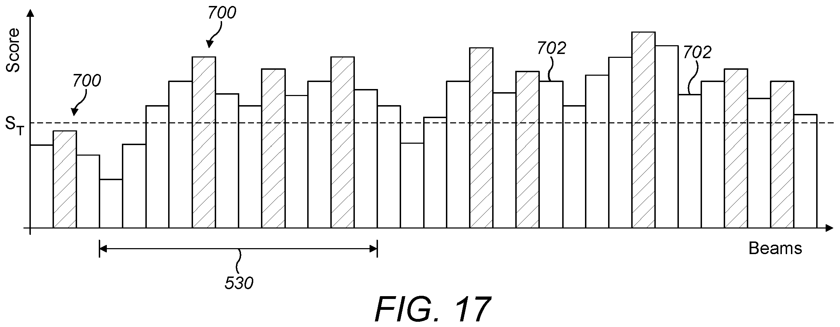

In operation (Figures 8 and 17), the active detection and tracking processing chain 254 serves to perform active detection and tracking of objects in the region to be ensonified 104 of the underwater environment 102. The performance of active detection and tracking using the sonar head 110 is known in the art and so, for the sake of conciseness of description, only salient aspects of the active detection and tracking processing chain 254 that are relevant to describing operation of the passive detection and tracking processing chain 256 or other system components will be described herein.

In this regard, the sonar head 110 is immersed in the underwater environment so as to submerge the sonar head 110 in the water in order to monitor the region to be ensonified 104. The processor platform unit 118 and the workstation 126 are then powered up. The workstation 126 loads and executes software to provide an operator of the system with graphical data and other information in accordance with the software provided by Sonardyne International Limited, appropriately modified also to provide passive contact detection and tracking information. Likewise, the processor platform unit 118 executes software in order to process acoustic reflectivity images and passive acoustic images in the manner described herein. Thereafter, the intruder detection system 100 starts monitoring the region to be ensonified 104 of the underwater environment 102 as follows.

The sonar head 110 ensonifies (Step 400) the region 104 of the underwater environment 102 and receives acoustic reflections, constituting reverberant energy, as a result of the ensonification, analogue data pertaining to the received acoustic reflections being provided by the logical receive array 270 to the receiver processing unit 166. In response to the received acoustic reflections arising from ensonification of the region 104, the active detection and tracking processing chain 254 generates active track data. However, in addition to reflecting objects, such as the large rock formation 112, the region 104 comprises less reflective objects or objects concealed by other objects either by propagation path obscuration or reduced Signal-to-Background Ratios (SBRs) and thus unable to reflect detectable acoustic signals as a result of this concealment, for example the AUV 106 and the SCUBA diver 108. These objects nevertheless emit acoustic energy that can be detected and tracked by the passive detection and tracking processing chain 256.

For both the active detection and tracking processing chain 254 and the passive detection and tracking processing chain 256, the receiver processing unit 266 receives (Step 402) the analogue acoustic signals obtained via the logical receive array 270 corresponding to N hydrophone elements of the transducer array of the sonar head 110. The analogue acoustic signals comprise both reverberant and non-reverberant energy, which is digitally sampled by the receiver processing unit 266 at a rate F samples per second where F is a sampling rate satisfying Nyquist's theory. In some embodiments, the digitisation process can include further signal conditioning steps, for example complex heterodyning, digital filtering and decimation to provide a signal output digitised at a reduced complex sample rate F₀ that is less than the Nyquist sampling rate but greater than the system bandwidth. In any event, the N channels of hydrophone element data are digitally sampled at a sampling rate over a period of time constituting a time frame. The time frame, T_{frame}, corresponds to a predetermined reporting range of the active detection and tracking processing chain 254. The sampling process yields a package of data corresponding to N channels of N_{T} samples constituting a data frame. This process is repeated each time the active detection and tracking processing chain 254 ensonifies the region 104, and each data frame generated is provided to the signal processing resource 272.

The data frame is then received by the pulse compression module 300 and each channel of the N channels of the data frame is correlated with a digitised replica of a transmitted pulse used to ensonify the region 104, the digitised replica being the result of sampling the replica at the sampling frequency. The result of the correlation is the pulse compression of the N channels of the data frame, the pulse compressed data frame being passed to the beamforming module 302, which applies a spatial filtering operation to the data so as to form N_{B} focussed beams in predetermined directions. In this example, the beams are uniformly spaced in angular direction around a full azimuth circle. The number of temporal samples corresponding to each of the N_{B} beams following processing by the beamforming module 302 is N_{S} about the same number of temporal samples contained by the data frame in respect of each of the N channels. The beamformed data set will be referred to hereafter as a B-scan frame (Step 404). The B-scan comprises a plurality of sets of samples respectively corresponding to a plurality of acoustic receiver beams. The nominal range scale associated with the B-scan frame is R_{S}, where in this example R_{S} = c/2 x N_{S}/F₀ where c is the prevailing average speed of sound in the ensonified region 104.

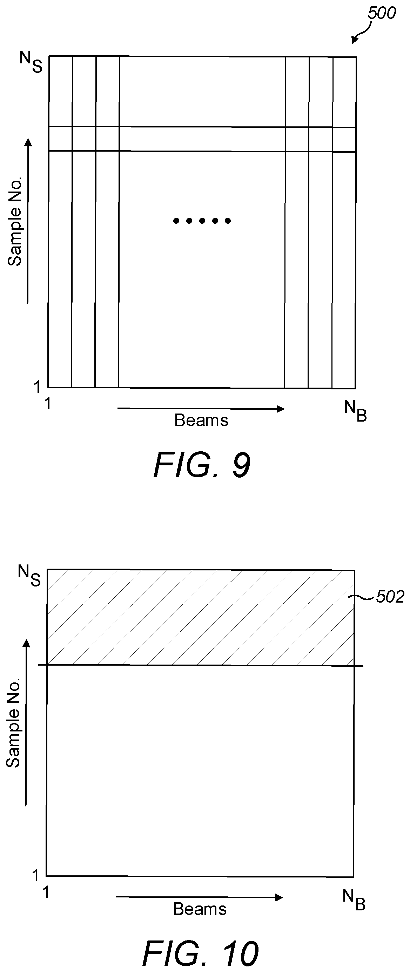

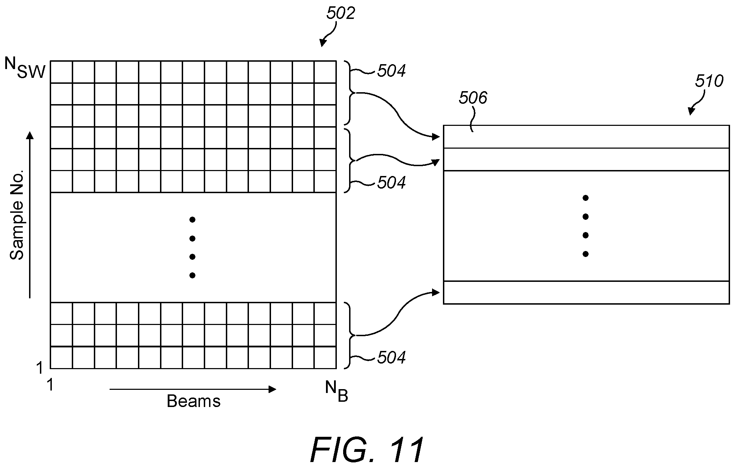

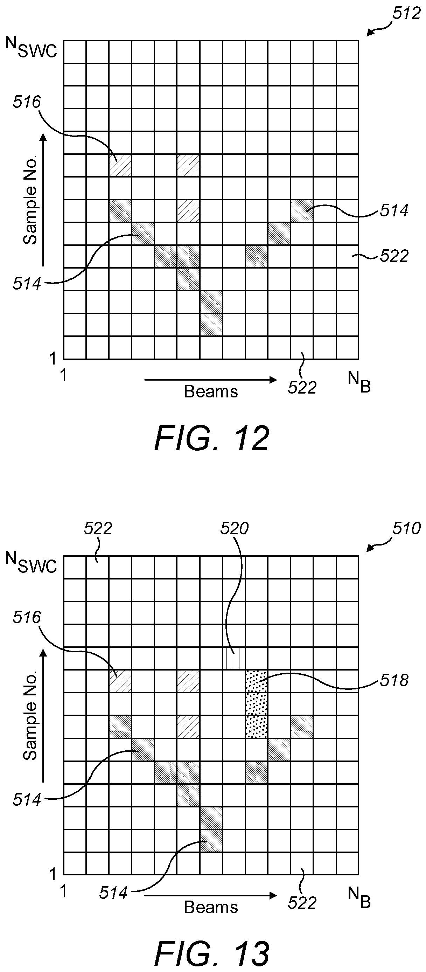

The B-scan frames generated are processed by the active detection module 304 according to any suitable known technique for active sonar detection of contacts. Referring to the passive detection and tracking processing chain 256, the passive signal processing unit 308 also receives the B-scan frame. Turning to Figure 9, the B-scan frame 500 comprises a plurality of samples, N_{S}, in respect of each of a plurality of beams, N_{B}, of the logical receive array 270. Upon receipt of the B-scan frame 500 by the passive signal processing unit 308, the B-scan windowing module 320 (Figure 7) performs a windowing operation (Step 406) on the B-scan frame 500 received, because target acoustic emissions must, in the context of a contemporaneous active and passive detection, be detected against a background of active reverberation energy. In this regard, it follows that the passive detection and tracking processing chain 256 can detect more reliably a certain level of acoustic emission against weaker active acoustic reflections from a relatively long range than against far stronger active acoustic reflections originating at closer ranges. In view of this principle, the passive detection of transient emissions is limited to an appropriately delayed fraction of the B-scan frame 500, in this example, referenced from the end of the B-scan frame 500. In this regard, the B-scan windowing module 320 selects (Step 406) a proportion of the B-scan frame 500 to leave a temporal portion 502 (Figure 10) of the B-scan frame 500. The selected proportion can reside between about 50% and about 100% of the duration of the B-scan frame 500, for example between about 70% and about 100%, i.e. approximately the last 30% of the duration of the B-scan frame 500 as shown in Figure 10, yielding a B-scan frame of N_{SW} samples. It should be appreciated that, in some circumstances, limiting the portion of the B-scan frame 500 can serve to enhance passive detection of transient emissions of a certain duration for a given detection threshold. It should be noted, however, that unlike active reflected target returns, these passively detected acoustic emissions are asynchronously detected with respect to the active transmit cycle since their arrival times at the sonar head 110 are a function of their position relative to the head and their absolute time of emission, and can therefore appear at varying sample numbers anywhere within the B-scan frame 500 even for an acoustic emitter at a fixed position relative to the sonar head 110 including one at a range beyond the nominal active range scale. Once the B-scan windowing module 320 has generated the temporal portion of the B-scan frame 502, the temporal portion of the B-scan frame 502 is provided to the beam compression module 322, which compresses (Step 408) the portion of the B-scan frame 502 selected to a B-scan frame of N_{SWC} samples. In this regard, and referring to Figure 11, a predetermined sample grouping size is used to select sets of samples 504 in respect of each beam N_{B} of the temporal portion of the B-scan frame 502. In the example of Figure 11, the predetermined sample grouping size is 3, but any other suitable sample grouping size can be employed. The sets of samples selected in respect of each beam, N_{B}, of the temporal portion of the B-scan frame 502 are sequential sets of samples, the samples of each set of samples 504 being averaged in respect of each beam, N_{B}, to yield a plurality of averaged samples 506 in respect of each beam, N_{B}. In this example, the average calculated is an arithmetic mean. However, other averaging and/or compression techniques can be employed, for example a peak-pick technique, a geometric mean or a median value. The beam compression module 322 therefore provides a compressed B-scan 510 to the ratio function module 324, the ratio function module 324 also accessing a reference map. In this regard, a reference map generation unit (not shown) supported by the signal processing resource 272 maintains the reference map 512 (Figure 12) of the region 104 by receiving compressed B-scans 510 from the beam compression module 322 and exponentially integrating a B-scan history built up in relation to the region 104. An example of reference map generation in respect of active sonar detection is described in UK patent no. 2 523 561. An integration factor is associated with the maintenance of the reference map 512, which is configurable between 0 and 1, for example 0.01.

Prior to updating the reference map 512, as mentioned above, a ratio function is applied (Step 410) in respect of the compressed B-scan 510 (Figure 13) to the reference map 512 (Figure 12). In this example, the reference map 512 comprises high amplitude data points 514, typically as a result of acoustic reflections from infrastructure in the region 104, for example the rock formation 112. The compressed B-scan 510 also, in this example, comprises corresponding high amplitude data points 514. Both the reference map 512 and the compressed B-scan 510 also comprise medium amplitude data points 516 in respect of clutter features. In the examples set forth herein, so-called "clutter features" can be regarded as any feature of the environment that causes a detection amplitude elevated above a normalised amplitude level (mentioned in further detail hereinbelow) of unity, for example anything on the seafloor, but not the seafloor itself, such as rocks and rock formations. However, clutter features do not exclusively exist on the seafloor and can include, for example, wake trails. Low amplitude data points 518 are, in this example, absent from the reference map 512, but present in the compressed B-scan 510. Similarly, a new target return data point 520 features in the compressed B-scan 510, but not the reference map 512. The remaining data points in both the reference map 512 and the compressed B-scan 510 are mean return level data points 522 from reverberant noise.

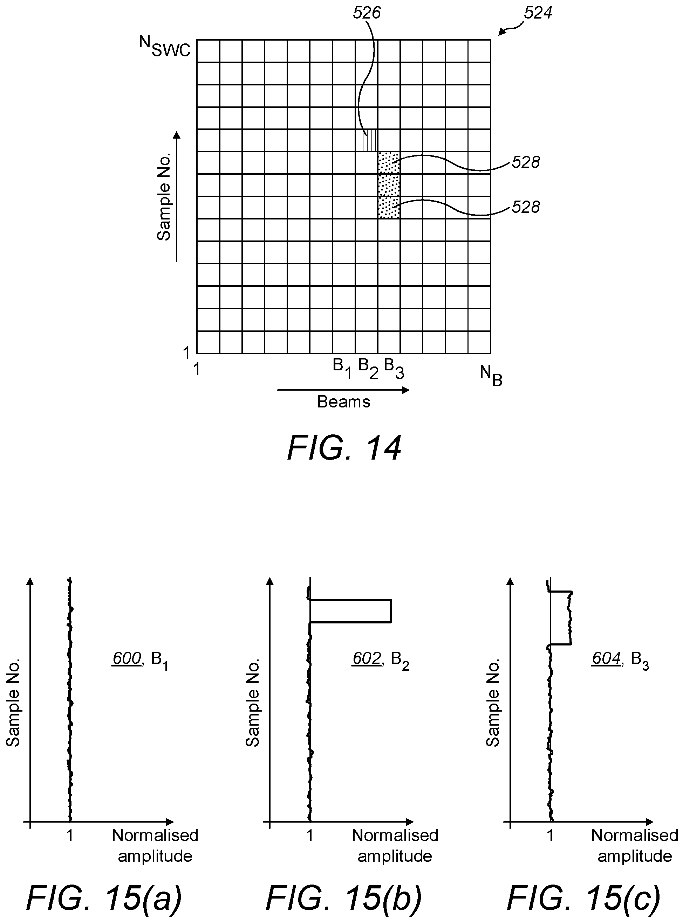

Application of the ratio function by the ratio function module 324 yields an extant compressed B-scan 524 (Figure 14) comprising normalised amplitude data points, the application of the ratio function substantially eliminating 'stationary' data points from the compressed B-scan 510 corresponding to infrastructure, clutter and background reverberant noise whilst accentuating contacts which have moved into or within the field of view since the last reference map update (Step 412). As such, in this example, the extant compressed B-scan comprises a first extant data point 526 corresponding to the new target return 520 of the compressed B-scan 510 and second extant data points 528 corresponding to the low amplitude data points 518 of the compressed B-scan 510 representing the presence of a new transient emission.

Once the ratio function has been applied (Step 410), the signal processing unit 272 updates (Step 412) the reference map 512 with the data from the compressed B-scan 510.

The passive detection and tracking processing chain 256 is responsible for correlating generally low amplitude level, temporally extended acoustic emissions within beams with the presence of emitting targets and so it is important to prevent high amplitude, spatially localised, returns from reverberant energy from reflecting targets from dominating the passive detection process and thus limit the ability of irrelevant beams leading to false detections and subsequently tracking thereof. Consequently, after or while the reference map 512 is being updated, the signal processing resource 272 supresses (Step 414) the dynamic range associated with each beam of the extant compressed B-scan 524. By way of explanation, three beams of the extant compressed B-scan will now be considered with reference to Figures 15 (a) to (c). The sequence of amplitude samples within a beam is referred to as an 'A-scan'. Referring to Figure 15(a), a first A-scan 600 corresponds to a first beam, B₁, of Figure 14. The first A-scan 600 has an average unity ratio amplitude following application of the ratio function mentioned above and corresponds to fluctuations caused by noise about the unity mean ratio amplitude, i.e. the first A-scan does not correspond to a non-stationary reflective target in the region 104 or a source of acoustic emissions. Turning to Figure 15(b), a second A-scan 602 corresponds to a relatively high acoustic return signal from the new target 520 in respect of the second beam, B₂, of Figure 14. In contrast, and referring to Figure 15(c), a third A-scan 604 has a normalised amplitude slightly elevated above unity corresponding to the low amplitude transient emission captured by the third beam, B₃, of Figure 14.

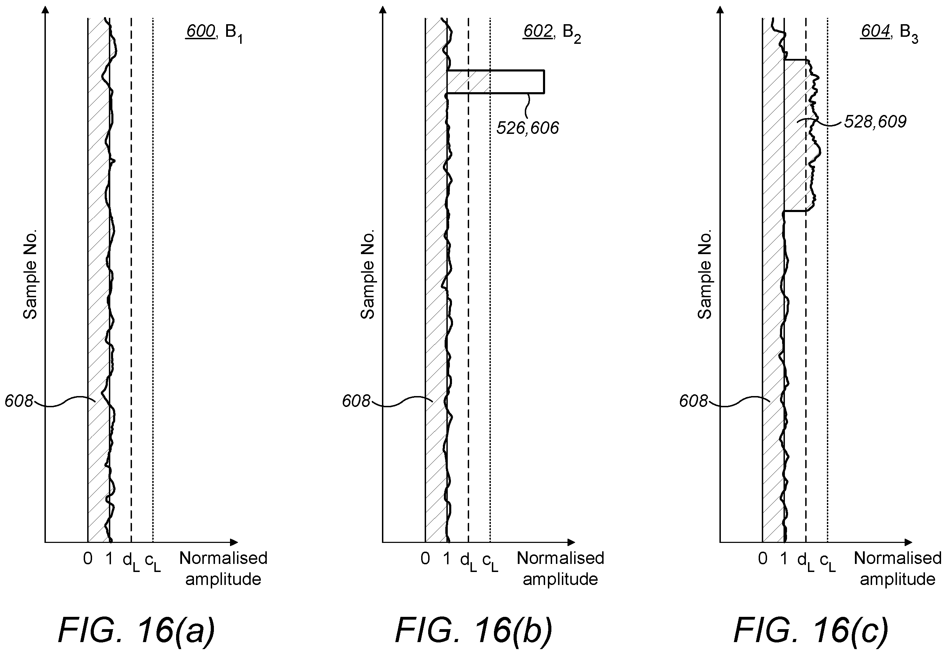

A-scans comprising acoustic energy arising from contacts that are not of interest from the perspective of passive detection, for example comprising reverberant energy originating from ensonification in respect of the active detection and processing chain 254, comprise energy levels that can distort the assessment of the A-scans as a result of a scoring process to be described later herein. Typically, the objective is to identify transient sources of acoustic emission that are relatively low level and have longer duration of emission than active reflections from non-stationary contacts. To ensure detection of such objects, a first step to perform is to apply a predetermined clipping level, c_{L}, to the A-scans of the extant compressed B-scan 524 in order to limit the effect of high energy reflections from non-stationary targets. Referring to Figures 16(a) to (c), which correspond respectively to Figures 15(a) to (c), the clipping level, c_{L}, is set relative to a predetermined detection level, d_{L}, that is also set. In this example, the detection level, d_{L}, is set between about 0.5 decibels and 10 decibels above the average normalised amplitude level (unity in this example) and the clipping level, c_{L}, is set between 0.5 decibels and 10 decibels above the detection level, d_{L}, for example between about 1 decibel and about 5 decibels, such as about 3 decibels.

Consequently, the signal processing resource 272 applies the clipping level, c_{L}, to each A-scan of the extant compressed B-scan 524. In relation to Figure 16(a), as the first A-scan 600 has an average unity ratio and corresponds to fluctuations caused by noise about the unity mean normalised amplitude, no energy of the first A-scan 600 is limited by clipping. In contrast, the second A-scan 602 of Figure 16(b) includes a limited range of consecutive samples of relatively high acoustic return signal 606 from the new target return 520 and comprises reflected energy exceeding the clipping level, c_{L}, and so all energy in respect of samples above the clipping level, c_{L}, is limited by the signal processing resource 272 to the clipping level, c_{L}, for example clipped samples 606. Turning to Figure 16(c), the third A-scan 604, includes a range of consecutive samples corresponding to the low amplitude transient emission 609, which has a normalised amplitude slightly elevated above unity, but not exceeding the clipping level, c_{L}. As such, the signal processing resource 272 does not limit the energy of any of the samples of the third A-scan 604 to the clipping level, c_{L}. Thereafter, once the dynamic ranges of any A-scans of the extant compressed B-scan 524 have been suppressed (Step 414), it is necessary to filter the acoustic B-scan data that has been generated for passive detection of objects and so, following the above-described pre-processing of the acoustic B-scan, the signal processing unit 272 estimates (Step 416) integrated power level or energy 608 within each A-scan of the extant compressed B-scan 524. The pre-processing, inter alia, removes historic artefacts and mitigates the influence of reverberant energy in the B-scan. This scoring metric for energy content is employed in order to identify those A-scans 604, which include elevated levels of energy over longer periods of time as compared with A-scans 602, which include non-stationary localised active acoustic reflections or A-scans 600 including neither. The result of the estimates of the energy or power of each A-scan is a vector of N_{B} elements corresponding to the number of beams of the extant compressed B-scan 524, each element of the vector constituting a score in respect of each beam relating to the likelihood of a transient emission being present in the samples of that beam for the current measurement frame.

The passive signal processing module 308 then passes the vector of scores to the passive detection module 310 for filtering. In this regard, the passive detection module 310 applies a regional maximum filter to the scores of the vector in order to detect (Step 418) local maxima 700 (Figure 17) amongst the scores of the vector, thereby assisting in the prevention of unwanted side-lobe based passive detections associated with non-covert (operationally irrelevant) sources of high amplitude acoustic emissions, for example ships manoeuvring in harbours, which have scores complying with a predetermined criterion, for example by comparison with the predetermined criterion, such as scores greater than a score threshold, S_{T}, to be described in further detail below, but which are not local maxima.

The scores of the vector that do not relate to regional maxima are zeroed, for example non-maxima scores 702 to leave local maxima as surviving scores. The surviving scores are then assessed relative to a score threshold, S_{T}, which is a function of a characteristic transient duration, t_{D}, the detection level, d_{L}, and the reduced complex sampling rate, F₀. In this regard, the transient duration, t_{D}, can be set to be around 0.5 seconds, but can depend upon the type of emission that is to be detected. The remaining non-zero scores of the vector that exceed the score threshold, S_{T}, constitute scores relating to candidate passive detections, i.e. the local maximum scores discounted for not exceeding the score threshold, S_{T}, are not interpreted as a potential source of non-reverberant energy emission, and the application of the score threshold, S_{T}, and assessment of scores exceeding the score threshold, S_{T}, is as follows.

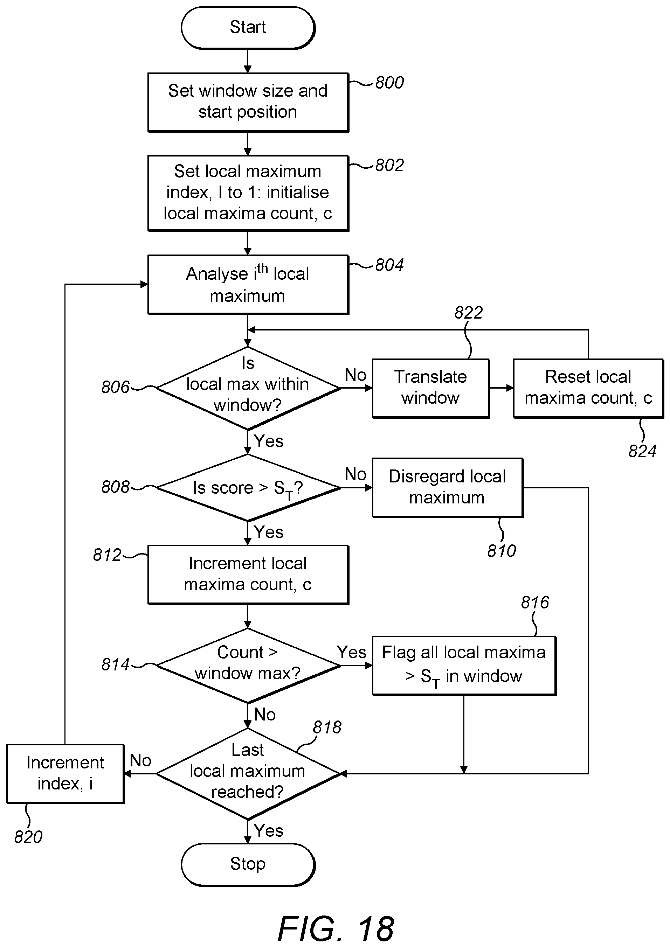

In order to identify beams corresponding to transient emission signals of interest and to ignore candidate passive detections associated with loud, non-covert contacts, a sliding box car filter is applied to the vector of scores, where the scores that are within a window of the filter and exceed the signal detection threshold, S_{T}, are counted. Referring to Figure 18, the sliding filter comprises a count window within which scores exceeding the score threshold, S_{T}, are counted. The signal processing resource 272 therefore sets (Step 800) the size of the count window, which dictates the width of the count window in terms of number of beams, i.e. the number of elements of the scoring vector to be considered. The start position of the count window is also initialised to unity so that the leading edge of the count window is aligned with the start of the scoring vector. A beam local maximum index is set (Step 802) to unity and a beam count variable, c, is initialised to zero. The signal processing resource 272 then accesses and analyses (Step 804) the i^{th} local maximum identified following application of the regional maximum filter mentioned above. The signal processing resource 272 firstly determines (Step 806) whether the local maximum selected is within the count window as currently positioned. If the local maximum selected is within the count window, then the signal processing resource 272 determines (Step 808) whether the score that is the local maximum selected exceeds the score threshold, S_{T}. If the score threshold, S_{T}, has not been exceeded, the local maximum is disregarded (Step 810) and the signal processing resource 272 determines (Step 818) whether the last local maximum in the vector has been reached. However, if the score threshold, S_{T}, has been exceeded, the beam count, c, is incremented (Step 812) and the signal processing resource 272 determines (Step 814) whether the beam count exceeds a predetermined beam count maximum value. If the beam count exceeds the predetermined beam count maximum value, all the local maxima currently in the count window that exceed the score threshold, S_{T}, are flagged (Step 816), to identify them as non-compliant local maxima, and then the signal processing resource 272 proceeds to determine (Step 818) whether the last local maximum in the vector has been reached. In the event that the beam count does not exceed the predetermined beam count maximum value, the signal processing resource 272 proceeds directly to determining (Step 818) whether the last local maximum in the vector has been reached.

If the last local maximum in the vector has been reached, then the passive detection module 310 as implemented by the signal processing resource 272 provides the score vector index of the beam or the score vector indices of the beams, relating directly to the beam direction(s) associated with passive detections, that have not been flagged to the passive tracking module 312 in a like manner to that performed by the active detection module 304 delivering active detections to the active tracking module 306, although range information will not be discernible in this example. However, if the last local maximum in the vector has not been reached, the beam local maximum index, i, is incremented (Step 820) and the above steps of analysis of the scores within the count window (Steps 808 to 820) are repeated until the last local maximum in the vector has been reached. In addition to the above determination of whether scores exceed the score threshold, S_{T}, and counting local maxima with the count window, the count window is shifted during the counting process. In this regard, where the signal processing unit 272 determines (Step 806) that the index, i, of the selected local maximum is outside the count window, the signal processing unit 272 translates (Step 822) the count window by unity in the direction of increasing score vector index and the beam count, c, is reset (Step 824) to zero. Thereafter, the signal processing unit 272 again determines (Step 806) whether the index, i, of the selected local maximum is outside the count window and translation of the count window is repeated until the selected local maximum is within the count window. Once the selected local maximum is determined to be within the count window, the signal processing unit 272 continues to process the local maximum in the manner described above (Steps 808 to 820).

Using any suitable technique, for example the technique employed by an association filter module of the Sentinel IDS^{®} system, the association filter module 314 communicates the A-scan data in respect of beams being tracked to the workstation 126. The workstation 126 displays sonar data, track data and alerts overlaid on a chart in respect of both active and passive contacts.

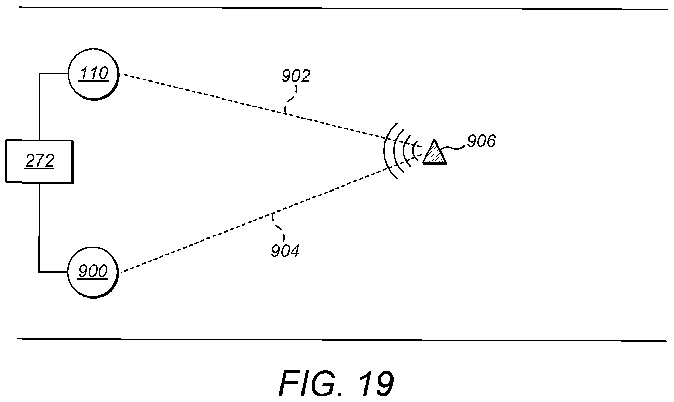

The skilled person should appreciate that the above-described implementations are merely examples of the various implementations that are conceivable within the scope of the appended claims. Indeed, this combined, contemporaneous, and co-located active/passive detection and tracking sonar could be deployed singly or as part of a multi-head underwater surveillance system. Referring to Figure 19, it should be appreciated that the underwater intruder detection system 100 can comprise the sonar head 110, constituting a first sonar head, and a second sonar head 900, the first and second sonar heads 100, 900 being operably coupled to the signal processing resource 272 and implementing the passive and active detection and tracking described above. Similar to the above examples relating to the single sonar head 110, but now in respect of two sonar heads, the signal processing resource 272 generates first and second extant compressed B-scans respectively comprising a first transient signal 902 and a second transient signal 904 associated with an object 906 making acoustic emissions. In this example, the signal processing resource 272 uses both the first and second extant B-scans to calculate a correlation between the first and second transient signals 902, 904 so as then to triangulate a position in space in respect of the first and second transient signals in response to a high correlation between the first and second transient signals 902, 904 using first and second bearings of the first and second transient signals 902, 904. In this manner, a target can be localised in space solely with the passive detection and tracking processing chain 256 without the need for any active detection and tracking.

In the above examples relating to the use of multiple sonar heads, the one or more sonar heads can be static or one or more can be free to move. Where movement is permitted, each movable sonar head can comprise appropriate sensors to generate navigation data, for example attitude and position data. The navigation data can be used to apply compensation to the beam data of B-scans generated in respect of each movable sonar head, thereby mitigating correlation errors associated with movement of the sonar head(s).

In the examples set forth herein, it should be appreciated that the respective operating receive bandwidths of the active detection and tracking processing chain 254 and the passive detection and tracking processing chain 256 are the same. However, in other examples, the receive bandwidths of the respective processing chains 254, 256 can overlap or remain separate.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A method of filtering an acoustic B-scan (500) for passive detection of an object (106, 108) underwater, the method comprising:
ensonifying (400) a region (104) of an underwater environment (102);
receiving (402) acoustic signals from the ensonified region (104) of the underwater environment (102), the received acoustic signals corresponding to a plurality of sonar beams;
generating (404) the acoustic B-scan (500) from the received acoustic signals, the acoustic B-scan (500) comprising a plurality of sets of samples (504) respectively corresponding to a plurality of acoustic projection beams;
the method being **characterized by** the steps of:
pre-processing (406 - 414) the acoustic B-scan (500) to supress (414) dynamic ranges of the pluralities of sets of samples (504) of the acoustic B-scan (500), thereby removing historic artefacts and mitigating influence of reverberant energy;
scoring (416) energy content in respect of the pre-processed acoustic B-scan (524) to provide a plurality of energy scores;
identifying (418) at least one local maximum (700) of the plurality of energy scores;
applying (808) a predetermined criterion to a local maximum of the at least one local maximum (700) identified in order to identify one or more acoustic projection beams of the pre-processed acoustic B-scan (524) corresponding to transient emission signals of interest.

2. A method as claimed in Claim 1, wherein the predetermined criterion is an energy score threshold value (S_{T}).

3. A method as claimed in Claim 1 or Claim 2, further comprising:
calculating the predetermined criterion (S_{T}) using one or more of: a sampling rate (F₀), a transient signal duration (t_{D}) and/or a signal detection level (d_{L}).

4. A method as claimed in Claim 3, wherein the signal detection level (d_{L}), is a normalised amplitude level and the signal detection level (d_{L}) is set between 0.5 decibel and 10 decibels.

5. A method as claimed in any one of the preceding claims, wherein scoring (500) energy content in respect of the pre-processed acoustic B-scan (524) further comprises:
setting a signal clipping level (c_{L}); and
integrating (416) energy recorded (608) in respect of each projection beam in the pre-processed acoustic B-scan (524) equal to and/or below the signal clipping level (c_{L}).

6. A method as claimed in any one of the preceding claims, wherein the application (808) of the predetermined criterion comprises filtering the at least one local maximum in order to discount a local maximum of the at least one local maximum that is not a potential source of non-reverberant energy.

7. A method as claimed in any one of the preceding claims, further comprising:
applying (806) a window to the plurality of energy content scores;
generating (802, 814) a count (c) of local maxima conforming to the predetermined criterion within the window; and
translating (822) the window.

8. A method as claimed in Claim 7, wherein the window corresponds to a range of bearings.

9. A method as claimed in Claim 7 or Claim 8, wherein a size of the window is configurable.

10. A method as claimed in any one of Claims 7 to 9, wherein applying the window to the plurality of energy content scores further comprises:
applying a sliding box car filter to the plurality of energy content scores.

11. A method as claimed in any one of Claims 7 to 10, further comprising:
setting a maximum count threshold; and
identifying (816) any local maxima conforming to the predetermined criterion within the window in response to the count (c) exceeding the maximum count threshold to provide a set of non-compliant local maxima identities.

12. A method as claimed in Claim 11, further comprising:
identifying (806) a local maximum outside the set of non-compliant local maxima identities as a potential source of non-reverberant energy.

13. A method of passive acoustic detection of an object (106, 108) in an ensonified region (104) of an underwater environment (102), the method comprising:
filtering an acoustic B-scan (500 using the method of filtering an acoustic B-scan (500) for passive detection of an object underwater as claimed in any one of the preceding claims;
analysing a result of the application of the predetermined criterion to the local maximum identified in order to determine whether the local maximum constitutes a potential source of non-reverberant energy; and
tracking the potential source of non-reverberant energy.

14. A method of performing active and passive acoustic detection substantially contemporaneously in respect of a region (104) of an underwater environment (102), the method comprising:
performing the method of passive acoustic detection as claimed in Claim 13 to detect the source of non-reverberant energy in the underwater environment (102);
receiving a plurality of acoustic signal streams subsequent to commencement of the ensonification (400) of the region (104) of the underwater environment (102); and
performing active detection processing in respect of the acoustic B-scan (500) generated for detecting a source of reverberant energy in the underwater environment (102) of a predetermined category.

## Patentansprüche

1. Verfahren zur Filterung eines akustischen B-Scans (500) zur passiven Detektion eines Objekts (106, 108) unter Wasser, das folgendes umfasst:
Beschallung (400) eines Bereichs (104) einer Unterwasserumgebung (102);
Empfang (402) akustischer Signale aus dem beschallten Bereich (104) der Unterwasserumgebung (102), wobei die empfangenen akustischen Signale einer Vielzahl von Sonarstrahlen entsprechen;
Erzeugung (404) des akustischen B-Scans (500) aus den empfangenen akustischen Signalen, wobei der akustische B-Scan (500) eine Vielzahl von Probensätzen (504) umfasst, die jeweils einer Vielzahl von akustischen Projektionsstrahlen entsprechen;
wobei das Verfahren durch folgende Schritte gekennzeichnet ist:
Vorverarbeiten (406-414) des akustischen B-Scans (500) zum Unterdrücken (414) der dynamischen Bereiche der Vielzahl der Probensätze (504) des akustischen B-Scans (500), wodurch historische Artefakte entfernt und der Einfluss der Nachhallenergie reduziert werden;
Bewerten (416) des Energiegehalts bezüglich des vorverarbeiteten akustischen B-Scans (524) zum Bereitstellen mehrerer Energiebewertungen;
Identifizierung (418) mindestens eines lokalen Maximums (700) unter der Vielzahl der Energiewerte;
Anwendung (808) eines vorgegebenen Kriteriums auf ein lokales Maximum des mindestens einen identifizierten lokalen Maximums (700), um einen oder mehrere akustische Projektionsstrahlen des vorverarbeiteten akustischen B-Scans (524) zu identifizieren, die relevanten transienten Emissionssignalen entsprechen.

2. Verfahren nach Anspruch 1, wobei das vorgegebene Kriterium ein Energiebewertungsschwellenwert (S_{T}) ist.

3. Verfahren nach Anspruch 1 oder 2, ferner umfassend:
Berechnung des vorgegebenen Kriteriums (S_{T}) unter Verwendung einer oder mehrerer der folgenden Größen: eine Abtastrate (F₀), eine Einschwingdauer des Signals (t_{D}) und/oder ein Signaldetektionspegel (d_{L}).

4. Verfahren nach Anspruch 3, wobei der Signaldetektionspegel (d_{L}) ein normalisierter Amplitudenpegel ist und der Signaldetektionspegel (d_{L}) zwischen 0,5 Dezibel und 10 Dezibel eingestellt ist.

5. Verfahren nach einem der vorhergehenden Ansprüche, wobei das Bewerten (500) des Energiegehalts bezüglich des vorverarbeiteten akustischen B-Scans (524) ferner umfasst:
Festlegen eines Signalkappungspegels (c_{L}); und
Integration (416) aufgezeichneter Energie (608) bezüglich jedes Projektionsstrahls im vorverarbeiteten akustischen B-Scan (524), die gleich und/oder unterhalb des Signalkappungspegels (c_{L}) ist.

6. Verfahren nach einem der vorhergehenden Ansprüche, wobei die Anwendung (808) des vorgegebenen Kriteriums das Filtern des mindestens einen lokalen Maximums umfasst, um ein lokales Maximum des mindestens einen lokalen Maximums auszuschließen, das keine potenzielle Quelle von Nicht-Nachhallenergie darstellt.

7. Verfahren nach einem der vorhergehenden Ansprüche, ferner umfassend:
Anwenden (806) eines Fensters auf die Vielzahl der Energiegehaltswerte;
Erzeugen (802, 814) einer Anzahl (c) lokaler Maxima, die dem vorgegebenen Kriterium innerhalb des Fensters entsprechen; und
Übertragung (822) des Fensters.

8. Verfahren nach Anspruch 7, wobei das Fenster einem Peilungsbereich entspricht.

9. Verfahren nach Anspruch 7 oder 8, wobei die Größe des Fensters konfigurierbar ist.

10. Verfahren nach einem der Ansprüche 7 bis 9, wobei das Anwenden des Fensters auf die Vielzahl der Energiegehaltswerte ferner folgendes umfasst: Anwenden eines gleitenden Rechteck-Filters auf die Vielzahl der Energiegehaltswerte.

11. Verfahren nach einem der Ansprüche 7 bis 10, ferner umfassend:
Festlegen eines maximalen Zählschwellenwerts; und
Identifizieren (816) jeglicher lokalen Maxima, die innerhalb des Fensters dem vorgegebenen Kriterium entsprechen, wenn die Anzahl (c) den maximalen Zählschwellenwert überschreitet, um eine Menge nicht konformer lokaler Maxima zu erhalten.

12. Verfahren nach Anspruch 11, ferner umfassend:
Identifizieren (806) eines lokalen Maximums außerhalb der Menge nicht konformer lokaler Maxima als potenzielle Quelle von Nicht-Nachhallenergie.

13. Verfahren zur passiven akustischen Detektion eines Objekts (106, 108) in einem beschallten Bereich (104) einer Unterwasserumgebung (102), umfassend:
Filtern eines akustischen B-Scans (500) unter Verwendung des Verfahrens der Filterung eines akustischen B-Scans (500) zur passiven Detektion eines Objekts unter Wasser nach einem der vorhergehenden Ansprüche;
Analysieren eines Ergebnisses der Anwendung des vorgegebenen Kriteriums auf das identifizierte lokale Maximum, um festzustellen, ob das lokale Maximum eine potenzielle Quelle von Nicht-Nachhallenergie darstellt; und
Verfolgen der potenziellen Quelle von Nicht-Nachhallenergie.

14. Verfahren zur im Wesentlichen gleichzeitigen Durchführung aktiver und passiver akustischer Detektion in Bezug auf eine Region (104) einer Unterwasserumgebung (102), umfassend:
Durchführen des Verfahrens zur passiven akustischen Detektion nach Anspruch 13, um die Quelle von Nicht-Nachhallenergie in der Unterwasserumgebung (102) zu detektieren;
Empfangen einer Vielzahl von akustischen Signalströmen nach dem Beginn der Beschallung (400) der Region (104) der Unterwasserumgebung (102); und
Durchführung einer aktiven Detektionsverarbeitung in Bezug auf den akustischen B-Scan (500), der zur Erkennung einer Nachhallenergiequelle in der Unterwasserumgebung (102) einer vorbestimmten Kategorie erzeugt wurde.

## Revendications

1. Procédé de filtrage d'un B-scan acoustique (500) pour la détection passive d'un objet (106, 108) sous l'eau, le procédé comprenant :
sonoriser (400) une région (104) d'un environnement sous-marin (102) ;
recevoir (402) des signaux acoustiques provenant de la région sonorisée (104) de l'environnement sous-marin (102), les signaux acoustiques reçus correspondant à une pluralité de faisceaux sonar ;
générer (404) le B-scan acoustique (500) à partir des signaux acoustiques reçus, le B-scan acoustique (500) comprenant une pluralité d'ensembles d'échantillons (504) correspondant respectivement à une pluralité de faisceaux de projection acoustiques ;
le procédé étant **caractérisé par** les étapes consistant à :
prétraiter (406 - 414) le B-scan acoustique (500) de manière à supprimer (414) des plages dynamiques desdites pluralités d'ensembles d'échantillons (504) du B-scan acoustique (500), supprimant ainsi des artéfacts historiques et atténuant l'influence de l'énergie réverbérante ;
attribuer un score (416) au contenu énergétique par rapport au B-scan acoustique prétraité (524) pour fournir une pluralité de scores d'énergie ;
identifier (418) au moins un maximum local (700) parmi la pluralité de scores d'énergie ;
appliquer (808) un critère prédéterminé à un maximum local parmi ledit au moins un maximum local (700) identifié, afin d'identifier un ou plusieurs faisceaux de projection acoustiques du B-scan acoustique prétraité (524) correspondant à des signaux d'émission transitoires d'intérêt.

2. Procédé selon la revendication 1, dans lequel le critère prédéterminé est une valeur de seuil de score d'énergie (S_{T}).

3. Procédé selon la revendication 1 ou 2, comprenant en outre :
le calcul du critère prédéterminé (S_{T}) à l'aide d'un ou plusieurs parmi : une fréquence d'échantillonnage (Fₒ), une durée de signal transitoire (t_{D}) et/ou un niveau de détection de signal (d_{L}).

4. Procédé selon la revendication 3, dans lequel le niveau de détection de signal (d_{L}) est un niveau d'amplitude normalisé et le niveau de détection de signal (d_{L}) est réglé entre 0,5 décibel et 10 décibels.

5. Procédé selon l'une quelconque des revendications précédentes, dans lequel l'attribution d'un score (500) au contenu énergétique par rapport au B-scan acoustique prétraité (524) comprend en outre :
le réglage d'un niveau de saturation de signal (c_{L}) ; et
l'intégration (416) de l'énergie enregistrée (608) pour chaque faisceau de projection dans le B-scan acoustique prétraité (524) inférieure ou égale au niveau de saturation de signal (c_{L}).

6. Procédé selon l'une quelconque des revendications précédentes, dans lequel l'application (808) du critère prédéterminé comprend le filtrage dudit au moins un maximum local afin d'écarter un maximum local parmi ledit au moins un maximum local qui n'est pas une source potentielle d'énergie non réverbérante.

7. Procédé selon l'une quelconque des revendications précédentes, comprenant en outre :
l'application (806) d'une fenêtre à la pluralité de scores de contenu énergétique ;
générer (802, 814) un nombre (c) de maxima locaux conformes au critère prédéterminé à l'intérieur de la fenêtre ; et
translater (822) la fenêtre.

8. Procédé selon la revendication 7, dans lequel la fenêtre correspond à une plage de relèvements.

9. Procédé selon la revendication 7 ou 8, dans lequel une taille de la fenêtre est configurable.

10. Procédé selon l'une quelconque des revendications 7 à 9, dans lequel l'application de la fenêtre à la pluralité de scores de contenu énergétique comprend en outre :
l'application d'un filtre à fenêtre rectangulaire glissante à la pluralité de scores de contenu énergétique.

11. Procédé selon l'une quelconque des revendications 7 à 10, comprenant en outre :
le réglage d'un seuil de nombre maximal ; et
l'identification (816) de tout maximum local conforme au critère prédéterminé à l'intérieur de la fenêtre en réponse au dépassement du seuil de nombre maximal par le nombre (c), afin de fournir un ensemble d'identités de maxima locaux non conformes.

12. Procédé selon la revendication 11, comprenant en outre :
l'identification (806) d'un maximum local en dehors de l'ensemble d'identités de maxima locaux non conformes en tant que source potentielle d'énergie non réverbérante.

13. Procédé de détection acoustique passive d'un objet (106, 108) dans une région sonorisée (104) d'un environnement sous-marin (102), le procédé comprenant :
le filtrage d'un B-scan acoustique (500) à l'aide du procédé de filtrage d'un B-scan acoustique (500) pour la détection passive d'un objet sous l'eau selon l'une quelconque des revendications précédentes ;
l'analyse d'un résultat de l'application du critère prédéterminé au maximum local identifié afin de déterminer si le maximum local constitue une source potentielle d'énergie non réverbérante ; et
le suivi de la source potentielle d'énergie non réverbérante.

14. Procédé de réalisation d'une détection acoustique active et passive sensiblement simultanée par rapport à une région (104) d'un environnement sous-marin (102), le procédé comprenant :
la mise en œuvre du procédé de détection acoustique passive selon la revendication 13 pour détecter la source d'énergie non réverbérante dans l'environnement sous-marin (102) ;
la réception d'une pluralité de flux de signaux acoustiques après le début de la sonorisation (400) de la région (104) de l'environnement sous-marin (102) ; et
la réalisation d'un traitement de détection active par rapport au B-scan acoustique (500) généré pour détecter une source d'énergie réverbérante dans l'environnement sous-marin (102) d'une catégorie prédéterminée.
